# EUROPEAN PATENT APPLICATION

(11) **EP 1 947 035 A1**
(43) Date of publication of application: **23.07.2008**
(21) Application number: 08000559.8
(22) Date of filing: 14.01.2008
(51) Int. Cl.: B65G 13/10

(54) **Sorter and roller-conveying system incorporating the sorter**

(30) Priority: 16.01.2007 JP 2007006909
(71) Applicant: Itoh Denki Co., Ltd., Kasai-shi, Hyogo 675-2302 (JP)
(72) Inventor: Itoh, Kazuo, Kasai-shi Hyogo 675-2302 (JP); Nakamura, Tatsuhiko, Kanzaki-gun Hyogo 679-2414 (JP); Mitsuyoshi, Makoto, Kakogawa-shi Hyogo 675-0045 (JP)
(74) Representative: Paul, Dieter-Alfred

(57) **Abstract**

A roller-conveying system includes a sorter (50) for sorting the articles from one passage (2) to others (3) as desired, the sorter (50) including a plurality of cells (60) arranged on substantially the same level as the conveying surfaces of the passages (2), (3) ; and at least some of the cells (60) including a motorized roller (80) rotatably carried in a shell (11), and a shifter 78 for changing the direction of the motorized roller 80; wherein the shifter 78 includes a revolving shaft (88) vertical to the conveying surface, the revolving shaft (88) connected to the motorized roller (80), so as to revolve the motorized roller (80) so as to cause it to direct toward a desired conveying passage.

## Description

### TECHNICAL FIELD

The present invention relates generally to a roller-conveying system, and more particularly, to a roller-conveying system provided with a sorter which sorts the conveying articles in desired directions.

### BACKGROUND ART

Japanese Patent Laid-open Specification No. 2006-44818 discloses a typical example of conventional conveying system. This system uses a lifter which lifts the conveying articles to transfer them in desired directions.

The lifting system is disadvantageous in lifting each article. The lifting consumes time, thereby decreasing the working efficiency. Additionally, the lifting system lacks positional flexibility. Furthermore, the lifting system requires a large space on and around the main conveyor. As a result, the conveying system becomes large as a whole.

Accordingly, the present invention is directed to a reduced size of the conveying system by providing a sorter capable of sorting on the same level as the main conveyor, thereby shifting the articles horizontally in desired directions.

### SUMMARY OF THE INVENTION

In this specification "rotate (rotation)" and "revolve (revolution)" will be differently used for convenience only and are not limiting. "Rotate" means that a roller turns on its own axis, and "revolve means that a roller turns in a horizontal plane about a vertical axis passing through the body of the roller. Under this terminology a roller rotates when it conveys articles, and it revolves when it changes its position in relation to a direction in which the articles are to be conveyed. This is also for explanation's convenience only.
A first form of roller-conveying system for achieving the above-mentioned object includes a sorter which has a plurality of cells arranged on substantially the same level as the conveying surfaces of the passages; and at least some of the cells including a motorized roller rotatably carried in a shell, and a shifter or directional changer (hereinafter "shifter") of the motorized roller; wherein the shifter includes a revolving shaft vertical to the conveying surface, the revolving shaft connected to the motorized roller, so as to revolve the motorized roller to agree to a desired conveying passage.

According to the first form of roller-conveying system, the articles are conveyed in desired directions in a plane with no ascent or descent, thereby increasing the conveying efficiency.

Furthermore, the amount of revolution of the motorized roller can be readily adjusted, thereby easing the change of the conveying directions of articles.

Herein, the amount of revolutions of the motorized roller includes the amount of angles at which the motorized roller horizontally revolves about an axis vertical to the conveying surface and the amount of angular displacement over which the motorized roller revolves.

The motorized roller is externally protected by the shell, thereby securing the compact structure as a whole.

In order to properly operate the roller-conveying system of the present invention in any form, it is essential to achieve the exact adjustment of the revolution of the motorized rollers.

Therefore, a second form of roller-conveying system according to the present invention, the shifter of the sorter includes an auxiliary motor for causing the motorized roller to revolve about the vertical shaft; and means for adjusting the number of revolution of the motorized roller in response to pulses generated from the operation of the auxiliary motor.

According to the second form of roller-conveying system, the motorized rollers can be exactly adjusted to the desired direction in which the articles are conveyed.

In order to facilitate the location of the motorized rollers in relation to the desired direction in which the articles are conveyed, the sorter of the invention is provided with cells in which the motorized rollers are independently operated, thereby enabling the individual motorized rollers to maneuver in relation to the conveying direction of articles.

Accordingly, a third form of roller-conveying system, the sorter includes a plurality of cells which are able to revolve about their own axis independently of the others.

As a result, the motorized rollers can revolve independently of others so as to take an appropriate position, thereby shifting the articles in various desired directions.

It often happens that the sorter 50 receives a reaction from the articles being carried on the cells. The sorter of the invention is made robust against such detrimental reaction from the conveyer, thereby maintaining the motorized rollers in the stay state against a reaction in the form of rotatable urge.

Therefore, a fourth form of roller-conveying system, the sorter includes means for stopping the motorized roller from revolving about the vertical axis.

According to the fourth form, the motorized rollers are prevented from revolving unexpectedly by the conveying articles, thereby ensuring that the articles are exactly conveyed in a desired direction.

The sorter is designed to be capable of maneuvering the motorized rollers in relation to directions in which the articles are to be conveyed by allowing the motorized rollers to revolve about a vertical axis passing through the body thereof, wherein they can revolve clockwise or anticlockwise, depending upon the situation.

Therefore, a fifth form of roller-conveying system, means for stopping the motorized roller from revolving in either direction.

As a result, the motorized rollers are located exactly in correspondence to a direction in which the articles are to be conveyed.

A sixth form of roller-conveying system, a selected number of motorized rollers revolve clockwise and anticlockwise as required, and the stop means stops the selected number of motorized roller from revolving either clockwise or anticlockwise, wherein the amount of revolution in one direction corresponds to that of revolution in the other direction.

As a result, the articles can be conveyed exactly in a desired direction, thereby shortening the time required for conveying articles.

A seventh form of roller-conveying system, the sorter is provided with means for associating the revolution of the motorized roller in one cell with that in other cell,

According to the seventh form of roller-conveying system, the positional change of one motorized roller causes other motorized roller or rollers to change their positions simultaneously, thereby resulting in efficient article conveyance.

An eighth form of roller-conveying system, the sorter is located at the junction of a first passage and a second passage.

As a result, the articles on one passage can be readily shifted to another passage in the same plane; that is, with no ascent or descent.

In short, the present invention provides a roller-conveying system which can swiftly and securely sort the articles from one passage to another passage as desired.

### BRIEF DESCRIPTION OF THE DRAWINGS

Fig. 1 is a plan view showing a roller-conveying system according to the present invention;
Fig. 2 is a cross-sectional view showing the internal structure of a motorized roller;
Fig. 3 is a perspective view showing a cell to be arranged in the sorter;
Fig. 4A is a plan view showing the sorter shown in Fig.1;
Fig. 4B is a cross-sectional view taken along A-A line in Fig.4A;
Fig. 4C is a cross-sectional view taken along B-B line in Fig.4A;

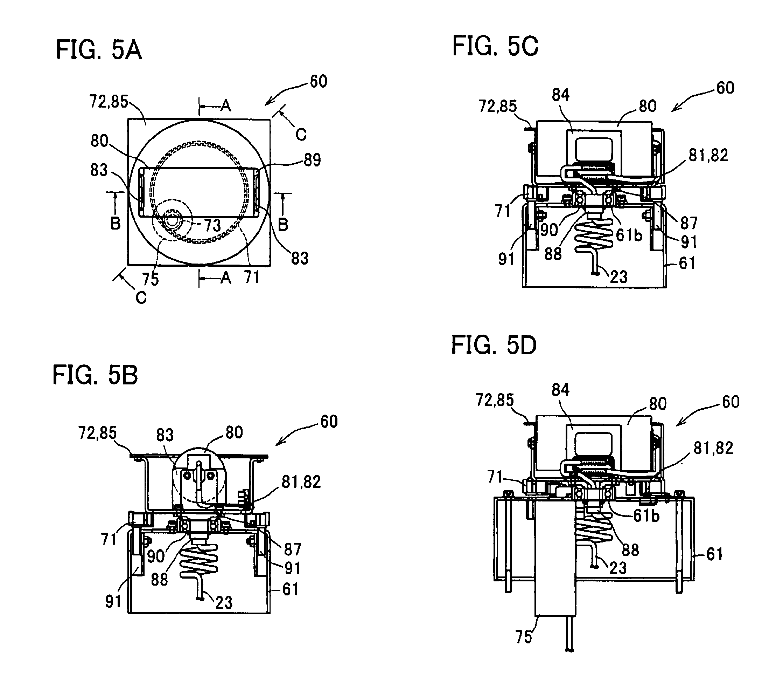

Fig. 5A is a plan view showing the cell of Fig. 3;
Fig. 5B is a cross-sectional view taken along A-A line in Fig.5A;
Fig. 5C is a cross-sectional view taken along B-B line in Fig.5A;
Fig. 5D is a cross-sectional view taken along C-C line in Fig.5A;
Fig. 6 is a perspective exploded view of the cell of Fig. 3;
Figs. 7A and 7B are plan views schematically illustrating the behavior of the roller-conveying system of the invention when it is in "sorted sideway conveyance";
Figs. 8A and 8C are plan views schematically illustrating the behavior of the roller-conveying system of the invention when it is in "sorted normal conveyance";
Figs. 8B and 8D are plan views schematically illustrating the relationship between the passage of conveyance and the position of a motorized roller in the cell;
Figs. 9A to 9C are plan views schematically illustrating the behavior of the roller-conveying system of the invention when it is in "sorted deviated conveyance", wherein Fig. C is an enlarged view especially illustrating an anticipated movement of the article from one course to another

### DESCRIPTION OF PREFERRED EMBODIMENTS

### The Basic Structure of the Roller-Conveyor

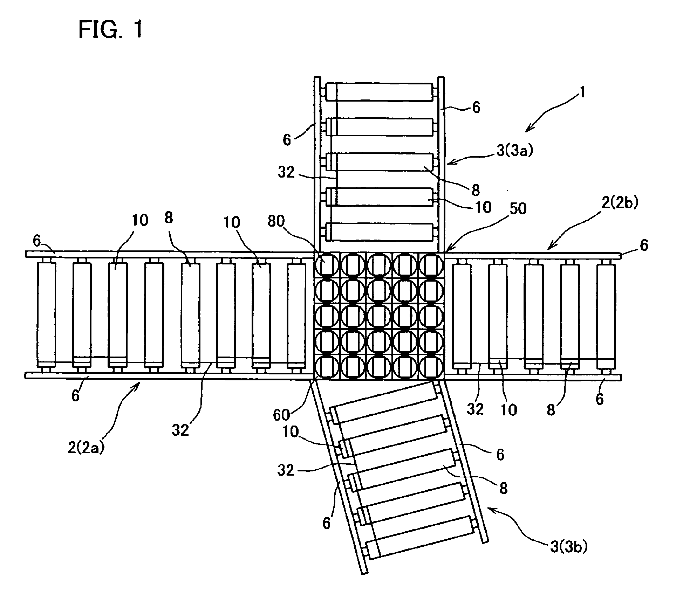

Fig. 1 shows a roller conveyer 1 having a main passage 2 and a sub-passage 3, and a sorter 50 located at the junction of the main passage 2 and the sub-passage 3.

The main passage 2 and the sub-passages 3 are constructed of two kinds of rollers; that is, free-rollers 8 and motorized rollers 10 crosswise arranged in frames 6.

The main passage 2 conveys articles, such as cartons, straightforward. The main passage 2 has two branch passages 2a at the left (upstream) and 2b at the right (downstream) of the sorter 50. The sub-passages 3 extend in different directions from the sorter 50.

The sorter 50 is designed to take over the articles from the main passage 2, and sort them in a desired direction. In the illustrated example of Fig. 1 the sub-passage 3a extends at right angle to the sorter 50, and the sub-passage 3b is arranged at a declined angle to the sorter 50.

As referred to above, each passage 2a, 2b, 3a and 3b is provided with the free-rollers 8 rotatable on the respective pins (unnumbered) supported in a known manner on the frames 6. The free-rollers 8 and the motorized rollers 10 are crosswise arranged on the respective passages.

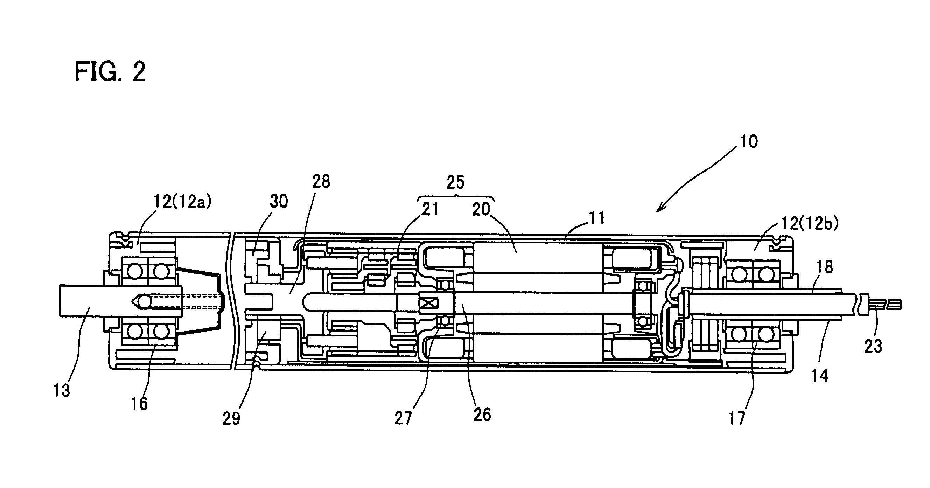

The motorized roller 10 and the free rollers 8 take the same appearance but the motorized roller 10 is provided with a motor 20 and a reduction gear 21. More specifically, as shown in Fig. 2 the motorized roller 10 includes a cylindrical shell 11 of metal, stoppers 12a and 12b, which close the opposite ends of the shell 11, and pins 13 and 14 which are rotatably carried in the stoppers 12a and 12b through bearings 16 and 17, respectively.

The pin 14 has a bore 18 through which a cable 23 is passed, so as to supply electric power and various control signals to the motor 20. The cable 23 extends beyond the shell 11.

### The Structure of the Motorized Roller 10

The motorized roller 10 houses a driver unit 25 which is constituted with the motor 20 and the speed reduction gear 21. The motor 20 is a brushless motor provided with an electromagnetic stator, a rotor having magnetic poles, and a position detector. The central spindle 26 of the motor 20 is connected to the speed reduction gear 21 through a bearing 27.

In Fig. 2, which shows the internal structure of the motorized roller 10 and 80, the speed reduction gear 21 includes a planet gear train whereby the rotating speed of the motor 20 is reduced through the spindle 26 at a desired reduction ratio. The output pin 28 of the reduction gear 21 is connected to a connecting member 30 secured to the shell 11 through an outer gear 29. The reduced speed of the motor 20 is transmitted to the shell 11 through the output pin 28 and the connecting member 30, thereby causing the roller 10 (i.e. the shell 11) to rotate.

Each of the main passage 2 and the sub-passage 3 is composed essentially of at least one motorized roller 10 and a plurality of rollers 8. Adjacent pairs of rollers 10 and 8, and of rollers 8 and 8 are mutually coupled by belts 32. Owing to this arrangement, once the motorized rollers 10 are driven, all the rollers 10 and 8 are caused to rotate at the same time through the belts 32. In this way the articles placed on the passages 2 are conveyed in accordance with the rotation of the rollers 10 and 8, and when having reached the sorter 50, they are sorted in a desired direction by the sorter 50, which will be described in detail below:

### The Structure and Operation of the Sorter 50 and Cells 60

As shown in Figs. 1, 3 and 4(A) the sorter 50 takes a square shape when viewed from top (Fig. 1), and provided with a plurality of cells 60; the illustrated example has 25 (5 x 5) pieces

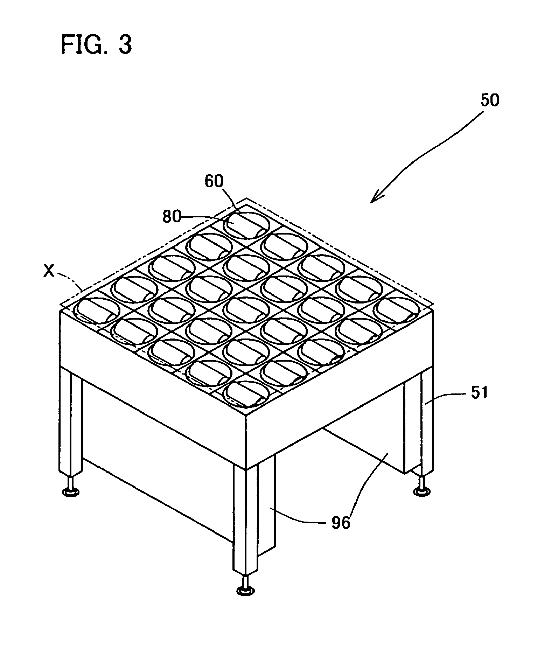

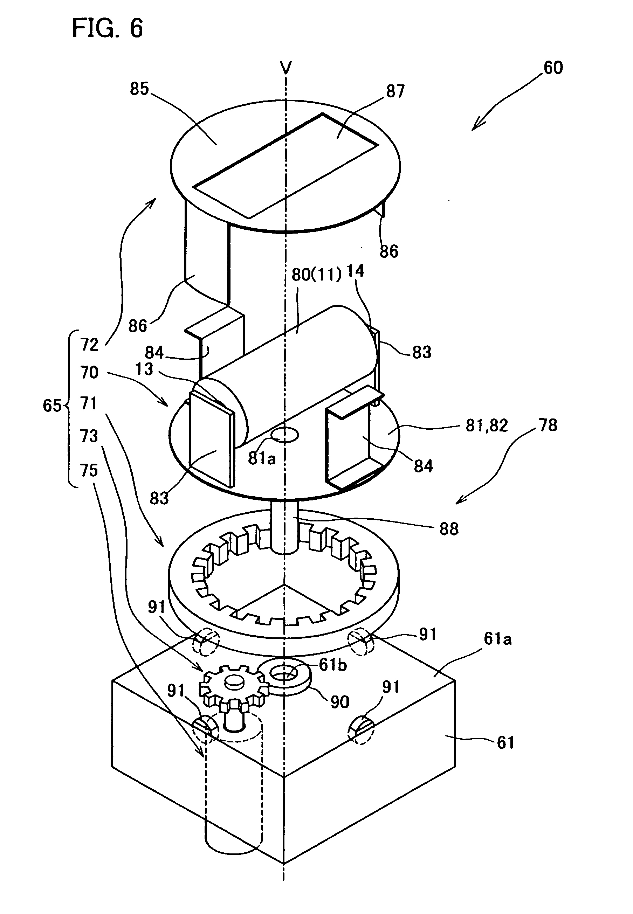

As best shown in Fig. 6, each of the cells 60 includes a cell driver unit 65 which houses a roller section 70 covered by a cover 85, and a motorized roller 80 having a shell 11 carried on a pair of first supporters 83 by the pins 13 and 14, wherein the roller section 70 is supported by a disc-shaped intermediate base 81 made of a plate 82 having a rectangular opening 87 in the center. The motorized roller 80 has the same structure as the motorized roller 10 but is shorter so as to be housed within the area of the intermediate base 81. The cover 85 having a pair of suspenders 86 is supported by a pair of second supporters 84 upright on the intermediate base 81. When the cover 85 is placed on the roller section 70, the semi-circular top surface of the roller 80 partly protrudes through the rectangular opening 87, and form an imaginary sliding surface X (Fig. 3) supporting the articles.

Again, referring to Fig. 6, the cell driver unit 65 is additionally provided with an internal gear 71, an external gear 73, and an auxiliary electric motor 75.

As shown in Fig. 6, the pair of first supporters 83 are upright and diametrically situated at points near the peripheral edge of the intermediate base 80, each holding the pin 13 and 14 for supporting the motorized roller 80.

The second supporters 84 are provided at right angular intervals to the first supporters 83 along the periphery of the intermediate base 81. The second supporters 84 support a covering unit 72 from underneath.

The opening 81a of the intermediate base 81 is co-axial with a hollow cylinder 88 extending below the intermediate base 81. The hollow cylinder 88 houses a cable 23 connected to the motorized roller 80 and is rotatably fitted in a bearing 90.

The internal gear 71 is secured to the bottom of the intermediate base 81, and constitutes a shifter 78 together with the external gear 73 and the auxiliary motor 75 for driving the external gear 73. The shifter 73 changes the direction of the roller 80.

The outside diameter of the internal gear 71 is substantially the same as that of the intermediate base 81. The internal gear 71 rests on rollers 91 provided along the periphery of a bed 61, and revolves thereon horizontally in relation to the bed 61.

As shown in Fig. 6, the covering unit 72 includes the cover 85 and the suspenders 86. The cover 85 has substantially the same outside diameter as that of the intermediate base 81 and the internal gear 71. The opening 87 is so sized that the semi-circular top surface of the roller 80 protrudes through it. When all the rollers of the cells 60 extrude through the respective openings 87, the extruding surfaces form the imaginary sliding surface X of the sorter 50.

The suspenders 86 project downward from the cover 85, and stay side by side with the outside of the first supporters 83, thereby unifying the cover 85 and the intermediate base 81 into the covering unit 72, with the roller 80 protruding its semi-circular top surface through the opening 87.

The external gear 73 is connected to the revolving axis of the auxiliary motor 75, wherein the revolving axis projects on the top surface of the bed 61. The external gear 73 is located within and in gear with the internal gear 71. When the auxiliary motor 75 is driven, the external gear 73 revolves, and the roller section 70 revolves in association with the external gear 73. In this way the cell 60 revolves round the axis V clockwise or anticlockwise, depending upon the situation.

The top surface 6 1 a of the bed 61 has a bore 6 1 b at the center. As referred to above, the rollers 91 are situated at 45°angular displacements along the periphery of the bed 61. The bore 61b is surrounded with a bearing 90 aligned with the bore 61 b. The cylinder 88 is inserted in and through the bore 61b; that is, through the bearing 90, thereby allowing the cylinder 88 to revolve about the axis V. The rollers 91 support the external gear 73 and help them rolling.

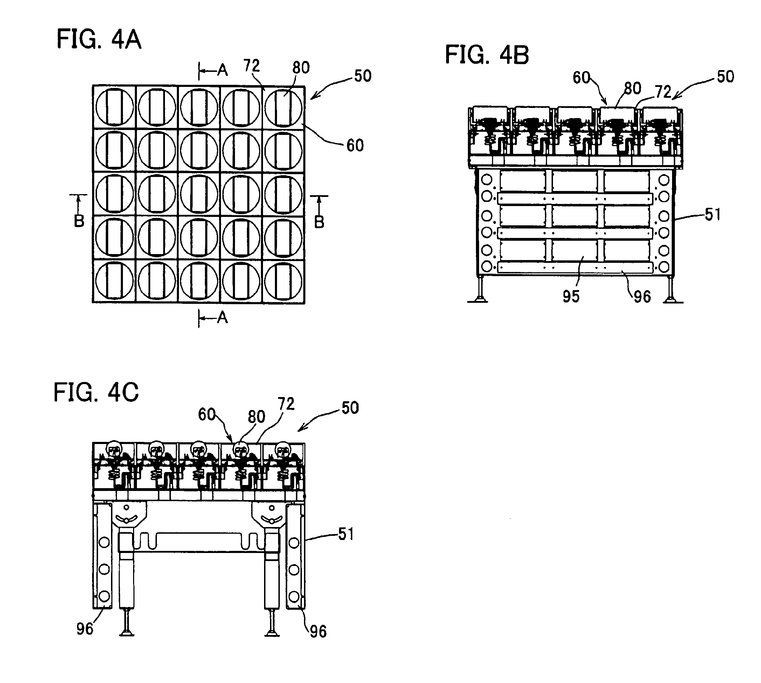

Each of the cells 60 is provided with a controller 95 as shown in Fig. 4A and 4B. The controller 95 will be more particularly described:

### The Function of the Controller 95 in the Cell 60

The controller 95 plays an important role by regulating the auxiliary motor 75 of the motorized roller 80. In addition, the controller 95 determines the number of revolutions of the roller 80 about the V axis. The regulation of the auxiliary motor 75 leads to the regulation of the revolution of the external gear 73, the internal gear 71, and the base 81. In this way the amount of revolutions of each roller 80 is regulated, thereby changing the directions of conveying the articles.

In addition, the controller 95 can prevent the roller 80 from revolution, this situation being referred to as "in the stay state". More specifically, when the motor 80 is in the stay state, the controller 95 monitors the pulses from the auxiliary motor 75 whereby it detects both the amount of revolutions and the revolting direction of the auxiliary motor 75. Then the free roller 8 is reversely rotated in correspondence with the detected amount of revolutions. In this way, the controller 95 determines the revolution of the roller 80 either clockwise or anticlockwise. Thus, even if the sorter 50 receives a reaction from the articles being carried on the cell 60, the roller 80 can be maintained in the stay state against the rotatable urge.

### The Operation of the Conveying System 1 and the Sorter 50

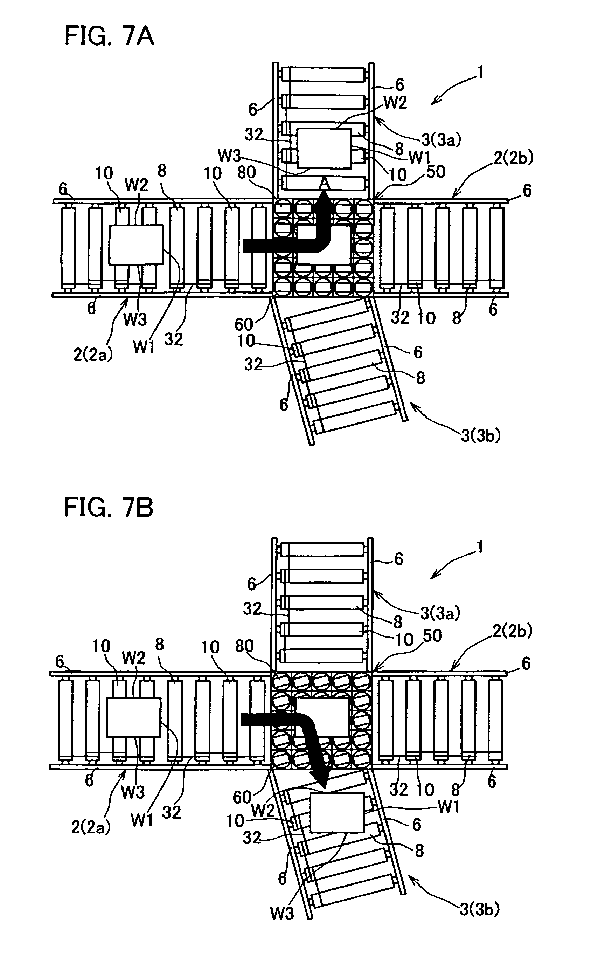

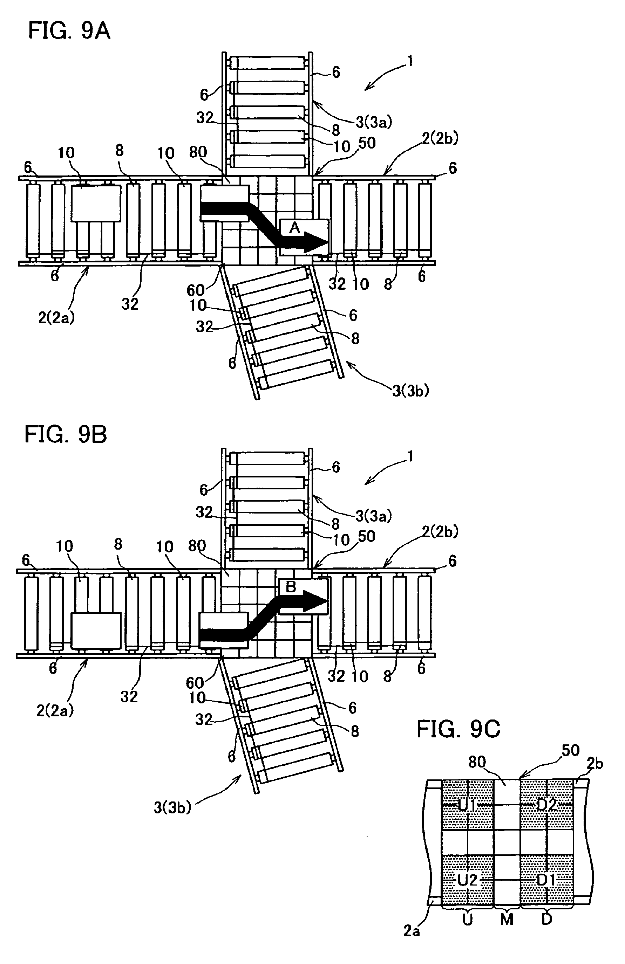

Now, referring to Figs. 1, 7 to 9, the conveying system 1 can transfer articles in at least three different modes; one being "normal straight conveyance" where the articles are straightly conveyed from the passage 2a to the passage 2b with the front W1 of each article ahead, another mode being "first sorted conveyance" where each of the articles is sorted onto the passage 3a (upward in Fig.1) or the passage 3b (downward in Fig.1) with their front W1 kept unchanged as shown in Figs.7A and 7B, and a further mode being "deviated conveyance" where the article is conveyed from the passage 2a to the passage 2b along a deviated course as shown in Fig. 9 wherein the front W1 kept unchanged. This mode will be "second sorted conveyance". In short, at least three conveyance modes are possible: that is, "normal straight conveyance", "first sorted conveyance" and "second sorted conveyance". Each of these modes will be more specifically described:

### The Operation of the "Normal Straight Conveyance"

In this mode, when the motorized rollers 10 are switched on and started, the rollers 8 follow to rotate. Thus, the conveyance of articles on the passage 2a starts.

The sorter 50 get ready for receiving the articles by arranging the shell 11 of the roller 80 in each cell 60 in parallel with the motorized rollers 10 and free rollers 8 as shown in Fig.1.

If the motorized rollers 80 of the sorter 50 are not in parallel with, but stay at right angle to the motorized rollers 10 and the free rollers 8 of the passage 2 and 3, the controller 95 of each cell 60 drives the auxiliary motor 75, thereby rotating the external gear 73 secured to the shaft of the auxiliary motor 75. The rotation of the external gear 73 causes the internal gear 71, the associated roller section 70 and the motorized rollers 80 to revolve about the axis V until the motorized rollers 80 are brought into parallel with the motorized rollers 10 and the free rollers 8 on the main passages 2 and 3. At this moment the controllers 95 stop the auxiliary motor 75.

After all the rollers 10, 8 and 80 have been arranged in parallel with one another, the articles on the passage 2a are conveyed up to a point near the sorter 50. At this moment the controllers 95 rotates the motorized rollers 80 in each cell 60. In this way the articles on the passage 2a continue to be straightly conveyed onto the passage 2b.

### The Operation of the "First Sorted Conveyance"

As shown in Figs. 7 each article is rectangular with a front W1, and opposite sides W2 and W3, wherein the front W1 is ahead and the sides W2 and W3 are left and right in relation to the advancing direction of the articles. In Fig. 7A the articles are conveyed from the passage 2a either to the passage 3a or to the passage 3b sideway with the side W2 of each article ahead. In Fig. 7B the articles are conveyed onto the passage 3b with the sides W3 ahead.

More specifically, when the articles are placed on the passage 2a, the motorized rollers 10 are driven to convey the articles along the normal course from upstream to downstream.

The sorter 50, before taking over the articles from the passage 2a, causes the rollers 80 of the cells 60 to take appropriate positions so as to sort the articles onto the passage 3a or 3b. More specifically, in Fig. 7A when the articles are to be sorted onto the passage 3a as indicated by the arrow A, the shells 11 (actually, the rollers 80) are brought into parallel with the rollers 8 and 10 of the passage 3a.

In Fig. 7B, the rollers 80 are likewise brought into parallel with the rollers 8 and 10 of the passage 3b. In either case, the controllers 95 in the respective cells 60 function to shift the positions of the rollers 80 as described above.

In this way each article on the passage 2a is sorted to the passage 3a as desired, with its left-hand side W2 ahead. When they are sorted to the passage 3b, they are conveyed on the passage 3b with their right-hand side W3 ahead.

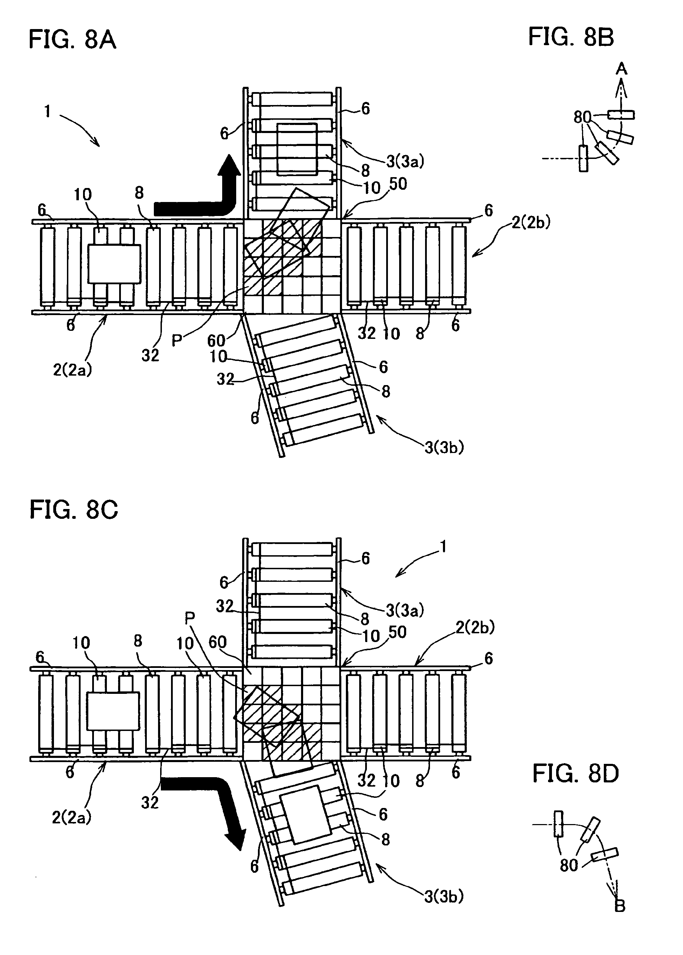

The feature of this conveyance resides in the fact that as shown in Figs. 8A and 8B the articles are shifted by the sorter 50 onto the passage 3a or 3b as desired, with their fronts W1 maintained ahead on the passage 3a or 3b in the same manner as they were on the passage 2a.

More specifically, when the articles are placed on the passage 2a, the motorized rollers 10 are driven, and the free rollers 80 follow to rotate, thereby causing the articles to move toward the sorter 50.

The sorter 50 is made ready to take over the articles from the passage 2, and the rollers 80 in the cells 60 are also made ready to mount them by revolving about the axis V and shifting their position as indicated by the arrow A in Fig. 8B. As a result, the articles are conveyed with their heads W1 maintained ahead.

Fig. 8C shows that the articles are sorted onto the passage 3b in the same manner, where the rollers 80 are shifted in the hatched area (P) in Fig. 8C.

In this way the articles on the passage 2a are conveyed into the desired directions with the aid of the controllers 95 which manipulate the motorized rollers 80 in the cell 60.

### The Operation of "Second Sorted Conveyance"

Briefly, this mode is characteristic in that when the articles are conveyed onto the passage 2b they are deviated by the sorter 50 from the original course on the passage 2a as indicated by the arrows A and B in Figs.9A and 9B. The articles maintain their original positions on the passage 2a but are deviated sideway and then advance on the passages 2b without changing their heads ahead.

For explanation' purpose in Fig. 9C, the sorter 50 is divided into an upstream (U) area, a middle (M) area and a downstream (D) area wherein the U area includes U1 and U2 sections, and the D area includes D1 and D2 sections. In Fig.9A the article is shifted from the U1 area to the D 1 as indicated by the arrow A. Likewise, in Fig. 9B the article is shifted from U2 to D2. In either case, the motorized rollers 80 of the cells 60 located in the M area cause the articles to change their positions as mentioned above.

### The Selection of the Three Modes of Conveyance

By selecting a desired mode from the three modes of conveyance, the articles can be conveyed straight from the passage 2a to the passage 2b, and from the passage 2a to the passage 3a or the passage 3b as desired.

As referred to above, the sorter 50 is provided with the plurality of cells 60 horizontally arranged in a plane (whose number is optional; in the illustrated example, 50 pieces). The roller section 70, the motorized roller 80 and the shifter 78 are all incorporated in the single cell 60. The motorized rollers 80 can take their positions in correspondence to the direction in which the articles are conveyed. The positional change takes place in a plane with no ascent or descent, in contrast to the known conveying system using a lifter.

The positional change of the motorized roller 80 is performed by adjusting the amount of rotation of the auxiliary motor 75. Alternatively, it is also possible that some of the cells 60 are provided with rollers having no driver like the free rollers 8 of the passages 2 and 3.

More specifically, the amounts of rotation of the auxiliary motor 75 and of the motorized roller 80 are counted in terms of the number of pulses generated from the operation of the auxiliary motor 75. However, the present invention is not limited to this specific structure, but any structure can be used if it can count the amount of rotation of the auxiliary motor 75 and the number of the motorized roller 80.

The sorter 50 of the present invention incorporates the motorized rollers 80 as a driver, thereby achieving the reduced size.

The auxiliary motor 75 performs the key function; that is, the auxiliary motor 75 causes the rollers 80 to revolve clockwise or anticlockwise about the axis V, thereby enabling the motorized rollers 80 to take appropriate positions in relation to the free-rollers 8 and the motorized rollers 10 of the passages 2 and 3.

As an alternative example, it is also possible that the motorized rollers 80 of some or all the cells 60 can be unilaterally rotatable; that is, in either direction. As a further alternative example, the motorized roller 80 need not revolve at 360° but can be less than it.

In the circumstances where the motorized roller 80 is required to stop, if the controller 95 detects a pulse signal from the auxiliary motor 75, which is supplied with the amount of electric power so as to reverse the roller 80 in correspondence to the number of revolutions of the motorized roller 80 so far performed.

Instead of the arrangement described above, a mechanical device such as a brake can be used to stop the motorized roller 80 from revolution. The mechanical device will simplify the procedure of control.

In contrast to the arrangement described above where all the motorized rollers independently revolve, the suggested alternative embodiment has a structure in which all or some of the motorized rollers 80 revolve about the axis V together. More specifically, in Fig. 9 cells 60 situated side by side can be operated together with the use of small component parts such as gears and rollers. This increases the operational efficiency.

Since the sorter 50 is located at the junction of the passages 2 and 3, it can efficiently sort the articles in desired directions. The articles are sorted from one passage to another horizontally in a place with no ascent or descent. This is advantageous as compared with the conventional lifting system.

It is also possible to place the sorter 50 at a desired position such as at an end, in the middle, or any other place of the conveyor. The number of the sorter 50 is not limited to a single but a plurality of it can be provided at intervals.

In the embodiment described above the motorized rollers 80 continue to rotate but it is possible to modify so that the rollers 80 start to rotate only in response to the articles approaching, thereby saving electricity. While the cells 60 are at rest, the motorized rollers 80 can be prepared for the subsequent conveyance.

In the embodiment described above a single sorter 50 is provided crosswise of the passage but a plurality of sorters can be provided crosswise of the passage.

As a further alternative embodiment the motorized rollers can be selectively driven in correspondence to the articles approaching, and the others are at rest, thereby avoiding wasting energy.

As another alternative embodiment a sorter can be provided at the junction of a plurality of passages, and jointly collect the articles from the plurality of passages, and then convey them together onto a particular passage..

In the "Sorted Normal Conveyance" where the articles are turned at right angle or other as shown in Fig. 8, the outer motorized roller and the inner motorized roller are normally rotated by the same number of rotations and at the same torque, but alternatively, they can be rotated by a different number of rotations and at a different torque.

As a modified version of the cell a plurality of motorized rollers can be installed in a single cell with the addition of free-rollers or none.

As a further modified version of the sorter, containers such boxes can be prepared for collecting the articles instead of the passages 3a and 3b in Fig. 1, or otherwise, a collecting site can be provided for a subsequent transportation.

In the embodiment described above each cell is provided with the controller 95 but alternatively, some of the cells can share a single controller 95, and/or means can be provided for being shared by the plurality of motorized rollers to detect information useful for controlling the motorized rollers 80 and auxiliary motors 75.

## Claims

1. A sorter for sorting the articles from one passage to others, **characterized in that** the sorter comprises a plurality of cells arranged on substantially the same level as the conveying surfaces of the passages; and at least some of the cells comprise a motorized roller rotatably carried in a shell, and a shifter of the motorized roller for allowing the motorized roller to direct toward a particular passage; wherein the shifter comprises a revolving shaft vertical to the conveying surface, the revolving shaft connected to the motorized roller, so as to revolve the motorized roller to cause it to direct toward a particular passage.

2. A sorter as defined in claim 1, wherein the shifter comprises an auxiliary motor for rotating the motorized roller about the revolving axis; and means for adjusting the number of revolutions of the motorized roller in response to pulses generated from the rotation of the auxiliary motor.

3. A sorter as defined in claim 1 or 2, wherein each of the cells revolves about its own axis independently of the others.

4. A sorter as defined in any of claims 1 to 3, further comprising means for stopping the motorized roller from revolving about the revolving axis.

5. A sorter as defined in claim 4, wherein the motorized rollers revolve clockwise and anticlockwise as required, and the stop means stops the motorized roller from revolving both clockwise and anticlockwise.

6. A sorter as defined in claim 4 or 5, wherein the stop means permits the motorized roller to revolve reversely in correspondence to the number of revolutions so far performed.

7. A sorter as defined in any of claims 1 to 6, further comprising means for jointly rotating the motorized rollers in each of the selected number of cells about the revolving axis

8. A roller-conveying system for conveying articles from one passage to others, comprising:
a first passage for conveying articles; and
a sorter for receiving the articles from the first passage and conveying them to a second passage horizontally in a plane;
wherein the sorter comprises a plurality of cells arranged on substantially the same level as the conveying surfaces of the passages; and at least some of the cells each comprising a motorized roller rotatably carried in a shell, and a shifter of the motorized roller; and
wherein the shifter comprises a revolving shaft vertical to the conveying surface, the revolving shaft connected to the motorized roller, so as to revolve the motorized roller until it is directed toward a desired passage.
